# EUROPÄISCHE PATENTSCHRIFT

(11) **EP 1 128 929 B1**
(45) Veröffentlichungstag und Bekanntmachung des Hinweises auf die Patenterteilung: **02.07.2003**
(21) Anmeldenummer: 99941359.4
(22) Anmeldetag: 14.09.1999
(51) Int. Cl.: B23K 37/047, B23K 26/08

(54) **VERFAHREN UND VORRICHTUNG ZUR HERSTELLUNG GESCHWEISSTER PLATINEN**
METHOD AND DEVICE FOR PRODUCING WELDED BLANKS
PROCEDE ET DISPOSITIF POUR LA FABRICATION DE PLATINES SOUDEES

(30) Priorität: 13.11.1998 CH 227998
(43) Veröffentlichungstag der Anmeldung: 05.09.2001
(73) Patentinhaber: ELPATRONIC AG, 8962 Bergdietikon (CH)
(72) Erfinder: URECH, Werner, CH-5466 Kaiserstuhl (CH)
(86) Internationale Anmeldenummer: CH9900435
(87) Internationale Veröffentlichungsnummer: WO00029168

(56) Entgegenhaltungen:
- EP-A- 0 743 129
- DE-A- 2 754 426
- DE-C- 3 912 036
- FR-A- 2 308 458
- US-A- 4 991 707
- US-A- 5 395 205

## Beschreibung

Die Erfindung betrifft ein Verfahren zur Herstellung geschweisster Platinen aus mindestens zwei Blechabschnitten. Ferner betrifft die Erfindung eine Vorrichtung zur Herstellung geschweisster Platinen aus mindestens zwei Blechabschnitten.

Das Zusammenfügen von Blechabschnitten zu grösseren Blechtafeln, bekannt als Platinen oder "tailored blanks", durch Schweissung, insbesondere Laserschweissung, ist bekannt. Die in der Regel aus Blechabschnitten verschiedener Dicken und/oder Blecheigenschaften gebildeten Platinen werden nachfolgend z.B. zu Formkörpern für die Automobilindustrie umgeformt, um Formkörper mit abschnittsweise unterschiedlichen, belastungsangepassten Eigenschaften zu bilden. So wird zB ein die Knautschzone mit definierender Längstrager im VW Golf oder die Seitenwand des Chrysler Cherokee durch Formkörper der genannten Art gebildet. Die Erfindung ist aber nicht beschränkt auf die Herstellung von tailored Blanks für die Automobilindustrie.

EP 532 835 zeigt eine Schweissmaschine zur Herstellung von Tailored Blanks, nachfolgend auch TB genannt. Der Begriff "Tailored" nimmt Bezug auf die vordefinierte Form der einzelnen Blechteile, sowie natürlich des zusammengeschweissten Gebildes, welche geometrisch und von der Legierung her auf den spätem Einsatzzweck hin (Träger in der Knautschzone oder Seitenwand) optimiert sind. Wie dort dargestellt, werden jeweils zwei Blechabschnitte mit vorbestimmter Form miteinander verschweisst, wobei natürlich eines der Blech bereits selbst aus miteinander verschweissten Teilen bestehen kann. Für ein übliches TB, bestehend aus ursprünglich vier Blechen A, B, C und D sind drei Schweissoperationen notwendig. ZB werden dann zwei Schweissmaschinen nebeneinander aufgestellt, welche zuerst die Teile A und B zum Teil AB sowie die Teile C und D zum Teil CD zusammenfügen, worauf die dritte Maschine die Teile AB und CD zum TB verschweisst. Das Handling zwischen den Schweissmaschinen erfolgt in der Regel durch Roboter. Solch eine Schweissanlage beansprucht troz gedrängter und optimierter Bauweise leicht eine Maschinenhalle von 35 mal 22 m (die einzelne Schweissmaschine zB 4 mal 6m) s auch EP A 743 129 oder EP 522 811, insbesondere das Layout in Fig 6, zur Beschikkung einer einzelnen Schweissmaschine; bei einer Produktion, wie sie in der Automobilindustrie besteht, kann Bedarf nach zwei oder drei parallel laufenden Anlagen bestehen. Diese Anlagen laufen, je nach Produktion im Automobilwerk, bis dreischichtig. Spezielle Anforderungen bestehen dann bei der Logistik, sei dies der Nachschub an Einzelblechen zur Anlage, das Handling in der Anlage oder der Weitertransport der fertiggestellten TB von der Anlage weg. Probleme verursachen einerseits die Abmessungen der Bleche in der Grössenordnung bis zu mehreren Metern, die Tonnengewichte der Blechstapel und die Verletzlichkeit der zu verarbeitenden Blechkanten. Weiter ist Lagerung in der Regel nicht möglich oder höchst unerwünscht, da das just-in-time Prinzip einzuhalten ist und die Lagermengen für die Produktion von bis zu mehreren tausend Fahrzeugen pro Tag (zB VW Golf III und IV) der Grösse wegen logistisch schwierig und damit kostenintensiv sind. An der Vereinfachung der Logistik, sei dies bei kleinen oder bei grossen Anlagen, wird laufend gearbeitet. Mangels Alternativen konzentrieren sich die Anstrengungen auf die präzise Produktionsplanung und auf die Optimierung des Layouts der Anlagen und der Fertigung überhaupt.

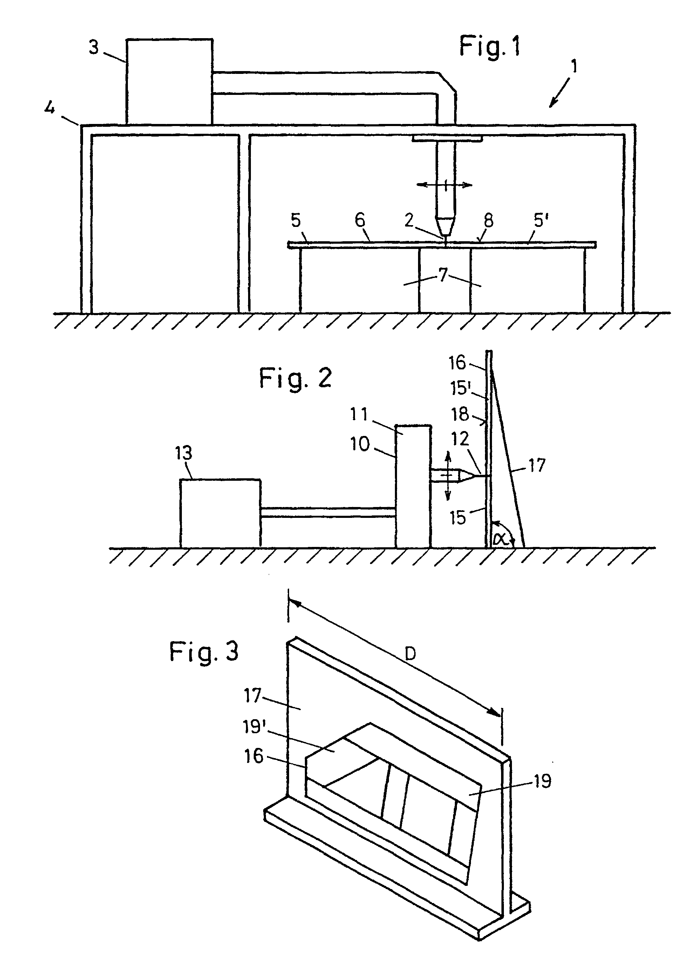

Das Schweissen der Abschnitte zur Platine erfolgt nach Stand der Technik in horizontal liegender Stellung auf entsprechenden zur Halterung der Abschnitte ausgebildeten Schweissanlagen, wie sie als Beispiel grob schematisch in Figur 1 gezeigt ist. Der von oben auf die Fügelinie der Abschnitte 5, 5' einwirkende Laserstrahl 2 der Anlage 1 wird von einem Laser 3 erzeugt und trifft auf die liegenden Abschnitte, die auf einer Halterung 7 magnetisch oder pneumatisch und allenfalls zusätzlich mechanisch in Schweisslage gehalten werden und in der Regel unter dem in einer Richtung verfahrbaren Laser in der dazu rechtwinkligen Richtung verfahren werden.

Auch die übrigen bekannten Bearbeitungsschritte (Prägen von Sicken, evtl. Schneiden) sowie die Förderung und (Zwischen-) Lagerung erfolgen in liegender Stellung der Abschnitte bzw. der Platine.

Die Handhabung der horizontal gehaltenen Platinen, welche z.T. grosse Abmessungen haben können, z. B. 200 x 200 cm oder grösser, bedingt einen erheblichen Platzbedarf und die Platine ist in der Regel nur von oben gut zugänglich. Aus DE-A-27 54 426 ist es bekannt, bei Grossraumbehältern vertikale Blechstösse zu schweissen.

Der Erfindung liegt die Aufgabe zugrunde, ein Verfahren bzw. eine Vorrichtung der eingangs genannten Art zu schaffen, welche diese Nachteile nicht aufweist.

Dies wird mit den kennzeichnenden Merkmalen des Anspruchs 1 bzw. des Anspruchs 14 erreicht.

Dadurch, dass die Platinen bzw. Abschnitte in aufrechter Lage bearbeitet werden, ergibt sich eine grosse Platzersparnis (in der Höhe ist der dazu notwendige Platz in der Regel ohnehin vorhanden) sowie eine bessere Zugänglichkeit zu den Platinen.

Als Bearbeitungsschritt erfolgt das Schweissen in aufrechter Stellung der Abschnitte bzw. Platine.

Im folgenden werden Ausführungsbeispiele der Erfindung anhand der Zeichnungen näher erläutert. Dabei zeigt:
Figur 1 schematisch eine Platinenschweissvorrichtung nach Stand der Technik;
Figur 2 schematisch eine Schweissvorrichtungen gemäss der Erfindung;
Figur 3 schematisch das Beladen einer Schweissstation;
Figur 4 eine erste Variante des Beladens einer Schweissstation;
Figur 5 eine weitere Variante des Beladens einer Schweissstation;
Figur 6 eine weitere Variante des Beladens einer Schweissstation;
Figur 7 schematisch das Schweissen in aufrechter Position;
Figur 8 schematisch das Entladen der Schweissstation;
Figur 9 das Prägen von Sicken in aufrechter Position;
Figur 10 eine Draufsicht auf das Auftrennen einer Abfolge aufrecht stehender Platinen;
Figur 11 das Lagern in Platinen in aufrechter Position; und
Figur 12 eine Variante des Schweissens und Beladens der Schweissstation.

Figur 1 zeigt die bereits erwähnte Vorrichtung nach Stand der Technik, bei welcher die zur Platine 6 zu verschweissenden Blechabschnitte 5 und 5' auf einer Halterung horizontal gelagert und zueinander fixiert sind. Der Laserstrahl 2 wird von oben auf die Platine 6 gerichtet, deren Oberfläche die Schweissebene 8 bildet. Die Laserlichtquelle 3 ist dabei in der Regel auf einem Lasergestell 4 angeordnet. Die entsprechende Vorrichtung hat einen grossen Platzbedarf und weist eine schlechte Zugänglichkeit für die Unterseite der Platine 6 (zB für die im Schweissprozess integrierte Schweissnahtkontrolle)sowie auch für die Laserquelle 3 auf.

Figur 2 zeigt in einer ersten grobschematischen Darstellung das Vorgehen, bzw. die Vorrichtung gemäss der Erfindung. Dabei werden die zu verschweissenden Blechabschnitte 15, 15' bzw. die Platine 16 durch eine Halteeinrichtung 17 in aufrechter Stellung gehalten. Unter aufrechter Stellung wird dabei eine Lage unter einem Winkel α zur Horizontalen verstanden, welche im wesentlichen senkrecht ist. Aber auch eine andere Winkellage zur Horizontalen, z.B. auch nur im Winkel von 45° wird im vorliegenden Fall noch als aufrecht stehend verstanden. Natürlich treten gewisse Vorteile bei einer solchen Schiefstellung nur zum Teil ein; bevorzugt ist die im wesentlichen senkrechte Lage. ZB die präzise Positionierung der einzelnen Bleche in Schweissposition kann heute mit genügender Zuverlässigkeit, aber unter ensprechendem Aufwand (s zB EP 583 999, EP 626 230 oder EP 565 846) realisiert werden. Bei ensprechend geformten Blechen kann mit Hilfe der Gravitation ein selbstzentrierender Effekt bei der Beladung der aufrecht stehenden Halteeinrichtung 17 genutzt und die notwendige Positionierung der Tafeln im Zehntel- oder Hunderstelmillimeterbereich vereinfacht oder noch sicherer ablaufen. Schräge Kanten benachbarter Bleche rutschen aufeinader ab, bis die gravitationsbedingte Endlage von selbst oder unterstützt, (nicht mehr nur durch ein Hilfsmittel, wie es bei horizontaler Anordnung der Bleche notwendig ist) erreicht ist. Bei der in Figur 2 gezeigten Vorrichtung kann die Laserquelle 13 auf dem Boden stehen oder auf einem stabilen Sockel. Dadurch entfällt das gesamte Lasergestell und damit wird auch die Gefahr von Vibrationen bzw. Relativbewegungen zwischen Laserquelle 13 und der Laseroptik reduziert. Insbesondere lange Rohre für die Strahlführung des Lasers sind diesbezüglich heikel. Es ergibt sich eine bessere Zugänglichkeit zum Laser bei den Installationsund Wartungsarbeiten. Der Laserstrahl 12 verläuft in horizontaler Richtung und fällt im wesentlichen senkrecht zur Schweissebene 18 auf die Abschnitte 15 und 15' auf. Eine Bewegungssteuereinrichtung 11 bewegt den Laserstrahl 12 entsprechend der zu schweissenden Naht. Dabei kann, wie mit den Pfeilen angedeutet, die Bewegung des Lasers nur in vertikaler Richtung erfolgen und das Werkstück 16 wird mit der Halterung 17 am Laser vorbeigeführt. Es ist ohne weiteres ersichtlich, dass durch die Massnahme des Aufrechtstellens der zu bearbeitenden Platine die von der Vorrichtung in einer Werkhalle benötigte Grundfläche wesentlich verringert werden kann; es resultiert auch ein einfacheres Konstruktionskonzept für die einzelne Schweissmaschine. In der Höhe hingegen ist der Platz in der Regel ohne weiteres vorhanden, um die aufrecht stehenden Platinen 16 mit den entsprechenden Haltevorrichtungen zu bearbeiten und zu handhaben.

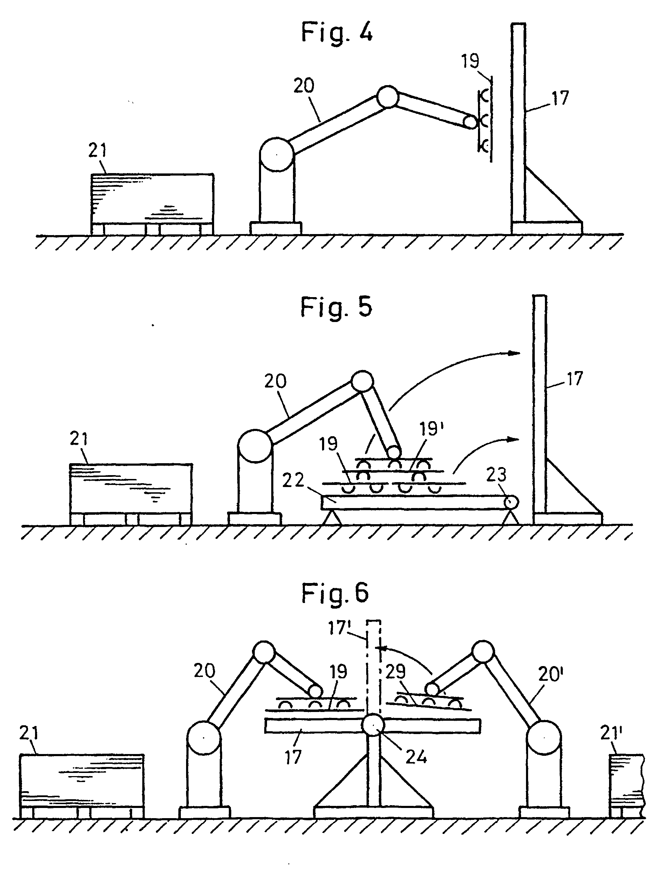

Figur 3 zeigt eine Halteeinrichtung 17 mit daran angeordneten Blechabschnitten, von denen lediglich zwei mit Bezugszeichen 19 und 19' bezeichnet sind, welche zusammen die Platine 16 bilden. Die Länge D der Halteeinrichtung 17 kann dabei ohne weiteres mehrere Meter betragen; die vertikale Schweissstation hat gerade dabei einen deutlich kleineren Platzbedarf und ergibt eine ideale Zugänglichkeit sowohl auf der Platineneinspannseite wie auch auf der Rückseite der Halteeinrichtung 17. Da grossflächige Platinen bereits nach Stand der Technik meist mit Magneten gehalten werden, allenfalls unter zusätzlicher mechanischer und/oder pneumatischer Halterung, ist auch eine vertikale Fixierung der Blechabschnitte auf dieselbe Weise ohne weiteres möglich. Nach Bedarf können zusätzlich verfahrbare und mit der Platinenauflageebene verbindbare mechanische Haltevorrichtungen verwendet werden. Figur 4 zeigt das entsprechende Beladen einer Halteeinrichtung 17, welche z. B. eine magnetische Halteeinrichtung ist, mittels eines Roboters 20. Der Roboter 20 stapelt dabei die einzelnen Blechabschnitte 19 von einem oder mehreren Stapeln 21 ab und bringt diese in der gewünschten Anordnung auf der Halteeinrichtung 17 auf. Diese kann dazu, wie bereits erwähnt, neben den magnetischen Haltemitteln auch mechanische Haltemittel oder lediglich mechanische Anschläge aufweisen, welche die Lage der Abschnitte 19 in vertikaler oder horizontaler Richtung definieren. Nach der Beladung der Halteeinrichtung 17 mit den mehreren Blechabschnitten zur Bildung der Platine wird die Halteeinrichtung zur Schweissstation mit dem Laser verfahren.

Figur 5 zeigt eine Variante der Beladung der Halteeinrichtung 17, worin durch den Roboter 20 die Anordnung der Bleche 19, 19' und allfälliger weiterer Bleche zunächst auf einem Beladetisch 22 in horizontaler Stellung vorgenommen wird. Nach dem Beladen wird der Beladetische um die Achse 23 nach oben geschwenkt, um die Blechabschnitte an der Halteeinrichtung zur Anlage zu bringen, wobei die Blechabschnitte von der Halteeinrichtung 17 magnetisch übernommen und dort festgehalten werden. Anstelle des Beladetischs 22 könnte natürlich auch die Halteeinrichtung 17 nach unten zum Beladetisch verschwenkt werden und danach wieder aufgerichtet werden.

Figur 6 zeigt eine weitere Anordnung, bei welcher die Halteeinrichtung 17 um eine Achse 24 in eine horizontale Position schwenkbar ist und in dieser von einem oder, wie gezeigt, zwei Robotern 20, 20' von zwei Stapeln 21, 21' mit Blechen 19 und 29 beladen werden kann. Nach der Beladung wird die Halteeinrichtung in die Schweissstellung verschwenkt, was mit unterbrochenen Linien als Stellung der Halteeinrichtung 17' dargestellt ist. Natürlich könnte das Beladen in den gezeigten Varianten auch von Hand oder mit anderen Mitteln als mit Robotern 20 durchgeführt werden.

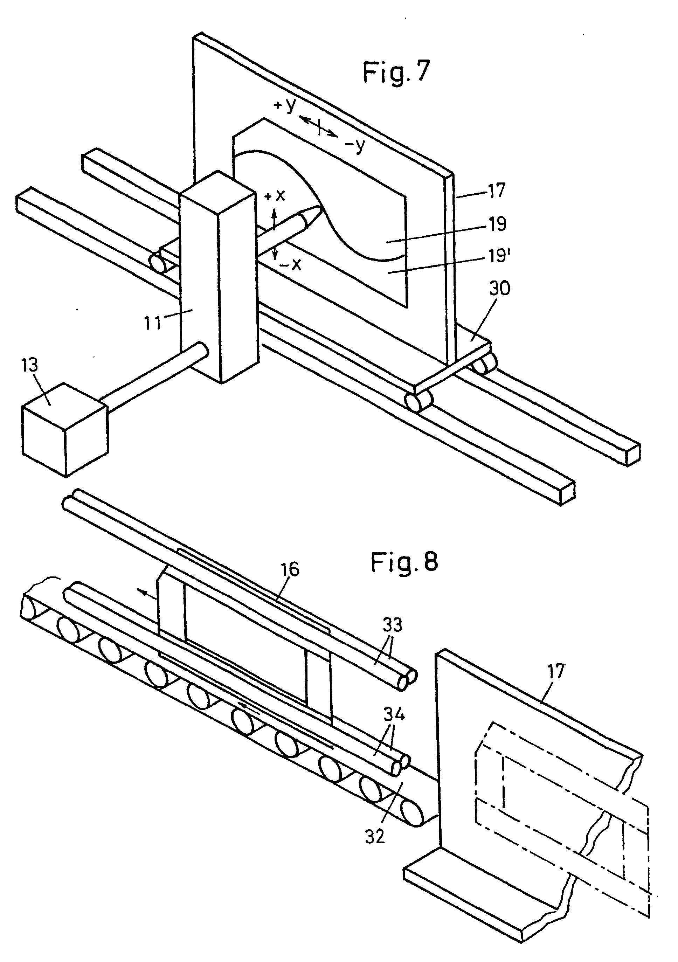

Figur 7 zeigt das Schweissen mit einem Laserstrahl aus einer Laserquelle 13, der von der Bewegungssteuerung 11 in vertikaler (X) Richtung verfahren werden kann. Die Blechabschnitte 19 und 19' befinden sich auf der Halteeinrichtung 17, welche mittels eines Wagens 30 in horizontaler (Y) Richtung am Schweissstrahl vorbeigeführt werden kann. Auf diese Weise können lineare und krummlinig verlaufende Schweissnähte ohne Probleme erzeugt werden.

Figur 8 zeigt grobschematisch das Entladen der geschweissten Platine 16. Die geschweisste Platine verlässt dabei die Schweissstation in aufrechter Stellung. Die Handhabung bzw. der Transport der Platine erfolgt z. B. auf schmalen, angetriebenen Förderbändern 32 oder Rollenbahnen. Zur vertikalen Führung der Platinen genügen beidseitig angebrachte freilaufende oder angetriebene Führungsrollen oder Führungsbänder 33. Die Übergabe der Platine von der Halteeinrichtung 17 auf die Fördermittel kann dabei durch einen Roboter oder durch an die Halteeinrichtung 17 herangeführte Bänder oder Rollen erfolgen. Ersichtlich ist auch hier, dass die geförderte Platine in aufrechter Stellung eine wesentliche Platzersparnis sowie eine bessere Zugänglichkeit von beiden Seiten, verglichen mit der herkömmlichen horizontalen Handhabung, ergibt.

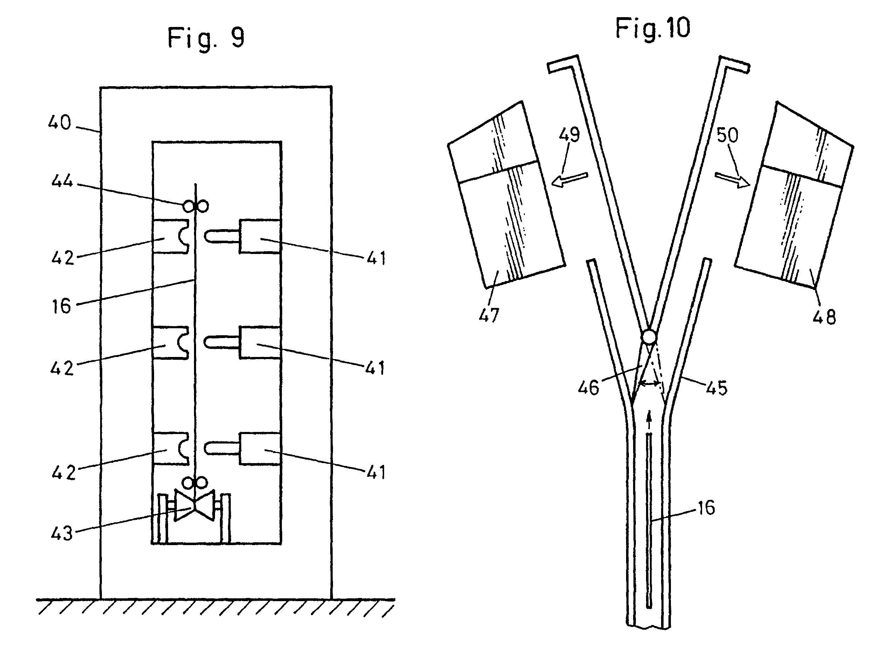

Zur Stapelung der Platinen ist es bekannt, in diese Sicken einzuprägen, um eine gleichmässige Stapelung der aus unterschiedlich dicken Blechen bestehenden Platine zu ermöglichen. Auch das Prägen von Sicken kann als Bearbeitungsschritt in aufrechter Position der Platine 16 erfolgen, was in Figur 9 schematisch dargestellt ist. Dabei wird die Platine durch Fördermittel 43 durch die Sickenprägeeinrichtung 40 transportiert und allenfalls mit Führungsmitteln 44 gehalten. Das Prägen der Sicken erfolgt durch entsprechende Stempel 41 bzw. Matrizen 42, welche nunmehr horizontal anstelle von vertikal arbeiten.

Figur 10 zeigt das Vereinzeln und Stapeln der Platinen 16, welche in den bereits beschriebenen Fördermitteln aufrecht stehend gefördert werden. Über Weichen 45 mit umschaltbaren Trennelementen 46 können die Platinen in verschiedene Bahnen gelenkt werden und von dort mit einfachen Handhabeeeinrichtungen auf die gewünschte Seite gekippt bzw. zu Stapeln 47 und 48 gestapelt werden. Ausschussplatinen können ebenfalls über solche Weichen ausgeschleust werden.

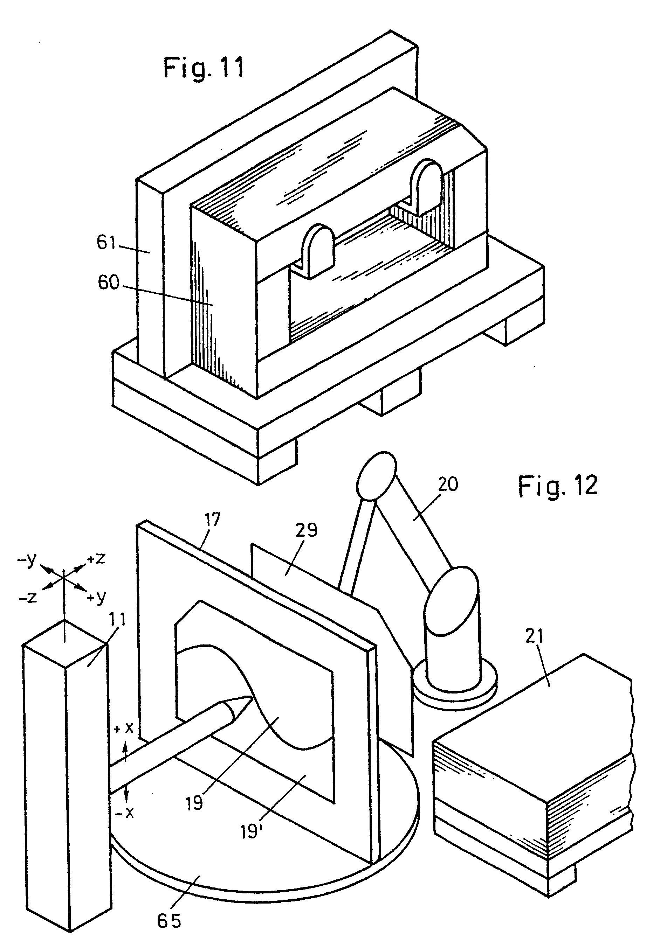

Figur 11 zeigt die Zwischenlagerung von Fertigplatinen in vertikaler Lage. Statt die Platinen wie bis anhin in horizontaler Lage zu stapeln, können diese nun bevorzugterweise in vertikaler Lage in entsprechenden Transportgestellen 61 aufgehängt werden. Diese Gestelle 61 ermöglichen eine platzsparende Zwischenlagerung ohne platzraubende horizontale Lagergestelle bzw. ermöglichen einen platzsparenden Transport. In diesem Fall entfallen entsprechende Einrichtungen zum Handhaben des Stapels 60 und allenfalls auch die Notwendigkeit von Stapelsicken, da die Platinen im Stapel 60 nicht mehr aufeinander aufliegen. Die beschriebene Bearbeitung und Handhabung der Platinen in aufrechter, im wesentlichen senkrechter, allenfalls auch schiefer Stellung ergibt eine wesentlich bessere Zugänglichkeit der geschweissten Platinen für visuelle Kontrollen sowohl im Bereich des Schweissaufspannwerkzeuges als auch im Bereich der Transportstrecken als bei liegenden Platinen. Eine visuelle Kontrollstation kann dabei auf einfache Weise im Bereich der Transportstrecke vorgesehen werden.

Figur 12 zeigt eine Variante mit einer doppelseitigen Halteeinrichtung 17, bei der auf der einen Seite die von der Einrichtung 17 gehaltenen Blechabschnitte 19 und 19' mittels der Schweisseinrichtung 11' geschweisst werden, wobei diese eine Steuerung des Lasers sowohl in X- wie in Y-Richtung ermöglicht, während auf der anderen Seite der Halteeinrichtung 17 Blechabschnitte von einem Stapel 21 durch eine Beladeeinrichtung, insbesondere einen Roboter 20, an der Halteeinrichtung befestigt werden. Nach Abschluss der Schweissung und der Beladung wird die Halteeinrichtung 17 um eine Horizontalachse oder eine Vertikalachse gedreht, wobei in der Figur dazu ein Drehtisch 65 gezeigt ist. Die geschweisste Platine kann dann durch den Roboter entladen werden und die Reihe Aufspannfläche wieder beladen werden, während auf der Gegenseite bereits wieder geschweisst wird.

Anstelle des vorgängig jeweils beschriebenen Schweissens kann natürlich auch ein anderer Bearbeitungsschritt erfolgen, wie das anhand des Einpressens von Sicken auch beschrieben worden ist, insbesondere kann auch eine Schneideoperation mit einem Laser bei aufrecht stehender Platine oder eine Schneideoperation an einzelnen Blechabschnitten bei aufrecht stehenden Blechabschnitten durchgeführt werden.

## Patentansprüche

1. Verfahren zur Herstellung mittels Laser geschweisster Platinen (16) aus mindestens zwei Blechabschnitten (19, 19'; 29), **dadurch gekennzeichnet, dass** die Abschnitte und/oder die Platinen bei mindestens einem Bearbeitungsschritt zunächst in im wesentlichen aufrechte Stellung gebracht und in dieser gehalten werden und in der im wesentlichen aufrechten Stellung bearbeitet werden, wobei als Bearbeitungsschritt die Schweissung der Abschnitte zur Platine in aufrechter Stellung erfolgt.

2. Verfahren nach Anspruch 1, **dadurch gekennzeichnet, dass** der Laserstrahl im wesentlichen horizontal abgegeben wird, und insbesondere, dass der Laserstrahl in Vertikalrichtung bewegbar und die Platine am Laserstrahl vorbeiführbar ist.

3. Verfahren nach Anspruch 1 oder 2, **dadurch gekennzeichnet, dass** als Bearbeitungsschritt das Formen von Sicken in der Platine in aufrechter Stellung erfolgt.

4. Verfahren nach einem der Ansprüche 1 bis 3, **dadurch gekennzeichnet, dass** als Bearbeitungsschritt das Schneiden der Abschnitte oder der Platine in aufrechter Stellung erfolgt.

5. Verfahren nach einem der Ansprüche 1 bis 4, **dadurch gekennzeichnet, dass** die Handhabung, insbesondere die Förderung, der Abschnitte und/oder Platinen in aufrechter Stellung erfolgt.

6. Verfahren nach Anspruch 5, **dadurch gekennzeichnet, dass** das Auftrennen einer Abfolge von Platinen in aufrechter Stellung erfolgt.

7. Verfahren nach einem der Ansprüche 5 oder 6, **dadurch gekennzeichnet, dass** eine Lagerung der Platinen in aufrechter Stellung erfolgt.

8. Verfahren nach einem der Ansprüche 1 bis 7, **dadurch gekennzeichnet, dass** die Abschnitte (19) zur Bearbeitung direkt in aufrechter Lage in die Halteeinrichtung (17) der Bearbeitungsstation geladen werden, insbesondere zur Schweissung in einer Schweissstation.

9. Verfahren nach Anspruch 8, **dadurch gekennzeichnet, dass** die Bearbeitungsstation, insbesondere die Schweissstation mit einer Halteeinrichtung (17) derart ausgestaltet ist, dass auf deren einer Seite eine Beladung erfolgen kann, während auf deren anderer Seite bearbeitet, insbesondere geschweisst wird, und dass nach Beendigung der Bearbeitung der Platine eine Drehung der Bearbeitungsstation erfolgt.

10. Verfahren nach einem der Ansprüche 1 bis 7, **dadurch gekennzeichnet, dass** die Abschnitte zur Bearbeitung, insbesondere zur Schweissung in einer Schweissstation, zunächst horizontal auf einen Beladetisch (22) geladen und von diesem in die aufrechte Stellung und an eine Halteeinrichtung (17) gebracht werden.

11. Verfahren nach einem der Ansprüche 1 bis 7, **dadurch gekennzeichnet, dass** die Abschnitte zur Bearbeitung zunächst horizontal auf eine in Horizontallage geschwenkte Halteeinrichtung (17) der Bearbeitungsstation, insbesondere zur Schweissung in die Halteeinrichtung einer Schweissstation, geladen werden und in derselben in aufrechte Stellung gebracht werden.

12. Verfahren nach Anspruch 1, **dadurch gekennzeichnet, dass** die Positionierung der Bleche in der Halteeinrichtung derart erfolgt, dass Bleche durch ihr Gewicht unterstützt gegen die vorgesehene Endlage rutschen können.

13. Verfahren nach Anspruch 1 oder 12, **dadurch gekennzeichnet, dass** die Abmessungen bzw. Umrisse durch Bleche und/oder die Anordnung der Bleche in der Halteeinrichtung (17) derart vorbestimmt werden, dass sie bei Anordnung in einer aufrechten Halteeinrichtung selbstzentrierend sind oder ihre korrekte Endlage gewichtsbedingt unterstützt wird.

14. Vorrichtung zur Herstellung von Platinen (16) aus mindestens zwei Blechabschnitten (19, 19'; 29), **dadurch gekennzeichnet, dass** die Vorrichtung zur Bearbeitung der Abschnitte oder der Platine in im wesentlichen aufrechter Stellung derselben ausgestaltet ist, indem die Vorrichtung eine aufrecht stehende oder in aufrecht stehende Lage schwenkbare Halteeinrichtung (17) für Blechabschnitte aufweist und eine Schweisseinrichtung (13, 11) umfasst, welche zur Erzeugung eines im wesentlichen horizontal zur Standfläche der Halteeinrichtung und der Schweisseinrichtung abgegebenen Laserschweissstrahles (12) ausgestaltet ist, der zudem in vertikaler Richtung verfahrbar ist, und wobei die Halteeinrichtung am Laserschweissstrahl vorbeiführbar ist.

15. Vorrichtung nach Anspruch 14, **dadurch gekennzeichnet, dass** sie zur Handhabung, insbesondere Förderung, von im wesentlichen aufrecht stehenden Platinen ausgestaltet ist.

16. Vorrichtung nach Anspruch 14, **dadurch gekennzeichnet, dass** sie mindestens eine Beladeeinrichtung (20, 20') umfasst, mittels welchen Blechabschnitte in aufrechter Lage der aufrecht stehenden Halteeinrichtung zuführbar sind.

## Claims

1. Method for the manufacture of laser-welded composite panels (16) from at least two sheet-metal pieces (19, 19'; 29), **characterized in that** in at least one processing step the pieces and/or composite panels are first placed in an essentially upright position and held in this position and are processed in the essentially upright position, the processing step comprising the welding of the pieces in the upright position to form the composite panel.

2. Method according to Claim 1, **characterized in that** the laser beam is emitted essentially horizontally and, in particular, that the laser beam is movable in the vertical direction and the composite panel is traversable past the laser beam.

3. Method according to Claim 1 or 2, **characterized in that** the processing step comprises the forming of beads in the composite panel in the upright position.

4. Method according to any one of Claims 1 to 3, **characterized in that** the processing step comprises the cutting of the pieces or of the composite panel in the upright position.

5. Method according to any one of Claims 1 to 4, **characterized in that** handling, in particular conveying, of the pieces and/or composite panels is performed in the upright position.

6. Method according to Claim 5, **characterized in that** the separation of a succession of composite panels is performed in the upright position.

7. Method according to Claim 5 or 6, **characterized in that** the composite panels are stored in the upright position.

8. Method according to any one of Claims 1 to 7, **characterized in that** the pieces (19) for processing, in particular for welding in a welding station, are loaded in the upright position directly into the holding device (17) of the processing station.

9. Method according to Claim 8, **characterized in that** the processing station, in particular the welding station, is equipped with a holding device (17) such that loading can proceed on one side thereof while processing, in particular welding, proceeds on the other side thereof, and that the processing station is rotated upon completion of the processing of the composite panel.

10. Method according to any one of Claims 1 to 7, **characterized in that** the pieces for processing, in particular for welding in a welding station, are first loaded horizontally on to a loading table (22), from which they are brought into the upright position and placed on a holding device (17).

11. Method according to any one of Claims 1 to 7, **characterized in that** the pieces for processing are first loaded horizontally on to a holding device (17) of the processing station which has been tilted into a horizontal position, in particular into the holding device of a welding station with a view to welding, and are brought into the upright position in said holding device.

12. Method according to Claim 1, **characterized in that** the sheets are positioned in the holding device by being assisted to slip under their own weight to their intended final position.

13. Method according to Claim 1 or 12, **characterized in that** the dimensions and/or profiles [of the] sheets and/or the arrangement of the sheets in the holding device (17) are predetermined so that when placed in an upright holding device they are self-centring or are assisted in finding their correct final position under their own weight.

14. Apparatus for the manufacture of composite panels (16) from at least two sheet-metal pieces (19, 19'; 29), **characterized in that** the apparatus for processing the pieces or the composite panel has an essentially upright configuration **in that** the apparatus has a holding device (17) for sheet-metal pieces that stands upright or is tiltable into an upright position and [in that the apparatus also] comprises a welding plant (13, 11) that is configured to generate a laser welding beam (12) emitted essentially horizontally with respect to the floor area of the holding device and welding plant.

15. Apparatus according to Claim 14, **characterized in that** it is configured for handling, and in particular conveying, composite panels that are standing essentially upright.

16. Apparatus according to Claim 14, **characterized in that** it comprises at least one loading device (20, 20') by means of which sheet-metal pieces can be fed in an upright position to the upright holding device.

## Revendications

1. Procédé de fabrication de platines (16) soudées par laser, à partir d'au moins deux tronçons de tôle (19, 19'; 29), **caractérisé en ce que** les tronçons et/ou les platines, lors d'au moins une étape opératoire, sont d'abord placées en position pratiquement verticale et maintenues dans cette position et usinées à la position pratiquement verticale, où, à titre d'étape opératoire, on effectue le soudage des tronçons à la platine, en position verticale.

2. Procédé selon la revendication 1, **caractérisé en ce que** le rayon laser est émis sensiblement horizontalement, et, en particulier, **en ce que** le rayon laser est déplaçable en direction verticale et la platine peut être passée sur le rayon laser.

3. Procédé selon la revendication 1 ou 2, **caractérisé en ce que**, à titre d'étape opératoire, on effectue le formage de moulures dans la platiné, en position verticale.

4. Procédé selon l'une des revendications 1 à 3, **caractérisé en ce que**, à titre d'étape opératoire, le découpage des tronçons ou de la platine est effectué en position verticale.

5. Procédé selon l'une des revendications 1 à 4, **caractérisé en ce que** la manipulation, en particulier le transport, des tronçons et/ou des platines est effectué en position verticale.

6. Procédé selon la revendication 5, **caractérisé en ce que** la séparation d'une succession de platines se fait en position verticale.

7. Procédé selon l'une des revendications 5 ou 6, **caractérisé en ce qu'**un stockage des platines est effectué, en position verticale.

8. Procédé selon l'une des revendications 1 à 7, **caractérisé en ce que** les tronçons (19) sont chargés pour l'usinage, directement en position verticale, dans le dispositif de maintien (17) du poste d'usinage, en particulier pour procéder au soudage dans un poste de soudage.

9. Procédé selon la revendication 8, **caractérisé en ce que** le poste d'usinage, en particulier le poste de soudage, est réalisé avec un dispositif de maintien (17), de manière que, sur un côté, puisse s'effectuer un chargement tandis que, sur l'autre côté, puisse s'effectuer un usinage, en particulier un soudage et **en ce que**, après l'achèvement de l'usinage de la platine, on effectue une rotation du poste d'usinage.

10. Procédé selon l'une des revendications 1 à 7, **caractérisé en ce que** les tronçons prévus pour subir l'usinage, en particulier pour le soudage dans un poste de soudage, sont chargés d'abord horizontalement sur une table de chargement (22) et, depuis celle-ci, sont passés à la position verticale et placés sur un dispositif de maintien (17).

11. Procédé selon l'une des revendications 1 à 7, **caractérisé en ce que** les tronçons prévus pour l'usinage sont d'abord chargés sur un dispositif de maintien (17), ayant été pivoté en position horizontale, du poste d'usinage, en particulier pour le soudage dans le dispositif de maintien d'un poste de soudage, et sont placés dans celui-ci en position verticale.

12. Procédé selon la revendication 1, **caractérisé en ce que** le positionnement des tôles dans le dispositif de maintien s'effectue de manière que les tôles puissent riper, en étant aidées de leur poids, vers la position finale prévue.

13. Procédé selon la revendication 1 ou 12, **caractérisé en ce que** les dimensions, respectivement les contours, sont déterminé(e)s, par des tôles et/ou par l'agencement des tôles dans le dispositif de maintien (17), de telle manière que, en cas d'agencement dans un dispositif de maintien vertical, elles soient autocentreuses ou bien soient aidées, sous l'effet de leur poids, à prendre leur position finale correcte.

14. Dispositif de fabrication de platines (16) à partir d'au moins deux tronçons de tôle (19, 19'; 29), **caractérisé en ce que** le dispositif d'usinage des tronçons ou des platines est réalisé sensiblement en plaçant ceux-ci ou celles-ci en position sensiblement verticale, **en ce que** le dispositif présente un dispositif de maintien (17), placé verticalement ou bien pouvant pivoter en position verticale, pour des tronçons de tôle, et comprend un dispositif de soudage (13, 11) qui est réalisé pour générer un rayon de soudage au laser (12) émis sensiblement horizontalement par rapport à la surface de pose du dispositif de maintien et du dispositif de soudage, qui, de plus, est déplaçable en direction verticale, et le dispositif de maintien étant susceptible d'être passé sur le rayon de soudage au laser.

15. Dispositif selon la revendication 14, **caractérisé en ce qu'**il est réalisé pour la manutention, en particulier le transport de platines placées sensiblement verticalement:

16. Dispositif selon la revendication 14, **caractérisé en ce qu'**il comprend au moins un dispositif de chargement (20, 20'), au moyen duquel des tronçons de tôle sont susceptibles d'être amenés, en position verticale, au dispositif de maintien placé verticalement.
